# EUROPEAN PATENT SPECIFICATION

(11) **EP 4 536 439 B1**
(45) Date of publication and mention of the grant of the patent: **25.11.2026**
(21) Application number: 23735415.4
(22) Date of filing: 13.06.2023
(51) Int. Cl.: B24B 27/00, B24B 9/06, B24B 9/00, B24B 47/16, B24B 47/12, B24B 51/00, F16D 65/00, B24B 19/28, B24B 41/06, B23Q 39/02

(54) **FLEXIBLE FINISHING STATION FOR BRAKE PADS AND METHOD THEREOF**
FLEXIBLE ENDBEARBEITUNGSSTATION FÜR BREMSBELÄGE UND VERFAHREN DAFÜR
STATION DE FINITION FLEXIBLE POUR PATINS DE FREIN ET PROCÉDÉ ASSOCIÉ

(30) Priority: 13.06.2022 IT 202200012506
(43) Date of publication of application: 16.04.2025
(73) Proprietor: ITT Italia S.r.l., 20045 Lainate (MI) (IT)
(72) Inventor: SORBARA, Mauro, 12032 BARGE (CN) (IT)
(74) Representative: Studio Torta S.p.A.
(86) International application number: PCT/IB2023/056085
(87) International publication number: WO 2023/242729

(56) References cited:
- EP-A1- 3 610 985
- KR-B1- 101 083 933
- US-A1- 2017 138 428

## Description

### Technical Field

The present invention relates to an automated grinding station for finishing brake pads, which is flexible in operation.

Here and below "flexible" means "having a ready capability to adapt to new, different, or changing requirements".

In other words, the invention relates to a finishing grinding station able to carry out, simultaneously or in sequence, with no or minimum reconfiguration, a plurality of different machining for removing / ablating friction material from a friction material block of a brake pad in order to provide the friction material block with chamfers and/or slots of different shapes.

### Prior Art

The braking elements for vehicles generally comprise a friction material block and a support therefor, to which the friction material block is bonded, e.g. by gluing or other methods. The support usually consists of a metallic plate, also known as "backplate".

The friction material block is hot molded under pressure, e.g. co-molded onto the support, starting from an appropriate mix of raw material components including a binder, generally organic like a thermosetting resin, fibers, abrasives, inorganic fillers, lubricants, etc.

In order to avoid generation of noises when the brake pad is in operation on a vehicle, e.g. during braking of the vehicle, the so obtained brake pad is to be subjected to a finishing operation in which at least some of the edges of the friction material block may be provided with chamfers and/or a flat face of the friction material block, opposite the support, may be provided with slots subdividing it in sections.

Finishing stations based on operating machines capable of performing a preset number of preset chamfers or slots on a friction material block of a brake pad are known and include two rails along which with two parallel chains drags the brake pads in a double line to interact with rotating grinding wheels which are arranged in stationary positions to perform chamfers on an axis that provide the angle of the chamfer by interpolation. This kind of finishing stations are capable of high production rates, up to 2100 pieces/h but are very rigid: firstly, they are specialized to carry out a single type of chamfers (or slots) always in the same position, since the flat chamfer angle is defined by the grinding wheel used with no adjustment.

Secondly, due to their structure, the operating machines are not able to perform chamfers or slots with an angle larger than 35°.

To meet flexibility requirement it has been developed a finishing station based on a robotized manipulator serving two rotating grinding wheel: the first one fixed, the second moving along an axis to reach the required position of the chamfers or slots and able to perform any type of chamfers, but the production rate is relatively low, since it reaches at top speed a productivity of 600 piece per hour.

EP 3 610 985 A1 shows an automated finishing station for vehicle braking elements according to the preamble of claim 1.

### Summary of the Invention

It is an object of the present invention to provide an enhanced automated finishing station for brake pads free from the drawbacks of the prior art and in particular which is reliable, easy to be implemented and able to carry out, simultaneously or in sequence, with no or minimum reconfiguration, a plurality of chamfers and/or slots of any different shapes on a friction material block of a brake.

According to the present invention an enhanced automated finishing station for brake pads is therefore provided as defined in the appended claims.

In particular, the finishing station according to the present invention is capable of performing different types of chamfers and slots on the same brake pad, working simultaneously two pads at a time, producing chamfers and slots of any inclination and any usual shape on brake pads at a rate up to 2,100 pad/hour and also any combination of slots.

A numerically controlled manipulator constituted by a robotized articulated arm (or, in the following, simply "robot") having at least six numerically controlled axes comprises a head rotating around a first axis and provided with a tool comprising a rigid plate attached integral to the head and arranged substantially perpendicular to the first axis, and a first and a second motorized holding devices carried by the rigid plate arranged side by side. Such motorized holding devices constitute as it will be seen a seventh and eight numerical axis of the robot according to the invention.

Each first and second motorized holding device comprises a motor carried integral by the rigid plate and a clamping assembly configured to hold one vehicle brake element, so that the tool is configured to carry on simultaneously two vehicle braking elements.

The clamping assembly of each first and second holding device is configured to be rotated by the corresponding motor around a respective second axis, the second axes of the first and of the second holding device being parallel to each other and to the first axis and being arranged side by side, spaced apart with a first interaxis consisting in the distance there between, the second axes being arranged eccentrically to the first axis.

The first and second holding device are operable independently of each other by the motors.

Moreover, the clamping assembly of each first and second holding device is configured to hold one vehicle brake element at a time by a support thereof carrying a block of friction material and arranged on the side opposite to a first face of the friction material block which is to be provided with chamfers and/or slots.

The clamping assembly of each first and second holding device is configured to keep the first face of the friction material block parallel to the rigid plate of the tool and facing a first grinding module which is part of the automated finishing station of the invention.

The first grinding module comprises a first and a second motorized head carried by a first stationary base arranged in proximity to the robotized articulated arm, the first motorized head supporting one respective first grinding wheel rotating around a third axis which is its own axis of symmetry, and the second motorized head supporting one respective second grinding wheel rotating around a fourth axis which is its own axis of symmetry;

The first and second motorized heads are rotatable around respective fifth axes arranged side by side and parallel to each other and perpendicular to the third and fourth axis of rotation of the respective first and second grinding wheel.

The fifth axes are spaced apart with a second interaxis, namely the distance from each other, identical to the first interaxis.

Furthermore, the automated finishing station of the invention also comprises: a second grinding module arranged side by side the first grinding module and in front of the robotized articulated arm; and at least one conveyor arranged between the robotized articulated arm and the first and second grinding modules.

The conveyor is configured to transport a plurality of vehicle braking elements in a row along an empty space delimited between the robotized articulated arm and the first and second grinding modules.

### Brief Description of Drawings

Preferred but not limiting embodiments of the invention will be now described in more detail with reference to a number of practical working examples of implementation thereof which are solely intended to disclose in a non-exhaustive and not limiting manner the feature which are part of the content of the present disclosure, and with reference to the figures of the attached drawings, in which:
- Figure 1 shows in a schematic way a three-quarter axonometric view from above of an automated finishing station for brake elements, like e.g. brake pads, realized according to the present invention;
- Figure 2 shows schematically in an enlarged scale, a three-quarter axonometric view from above of essential elements of the automated finishing station of figure 1, with parts removed for sake of simplicity;
- Figures 3 show schematically in elevation and in a further enlarged scale a longitudinal side view, sectioned in a radial plane, of a grinding module pertaining to the automated finishing station of figures 1 and 2;
- Figure 4 shows schematically in elevation a front view of a detail of a robotized articulated arm which pertains to the automated finishing station of figures 1 and 2;
- Figures 5 and 6 show schematically in a reduced scale, a same three-quarter axonometric view from above of the grinding module of figure 3 in two different configuration of use;
- Figure 7 shows schematically in an enlarged scale, a three-quarter axonometric view from above of a further grinding module of the automated finishing station of figures 1 and 2;
- Figure 8 shows schematically and in an enlarged scale, a three-quarter axonometric view from below of a detail of a tool carried by the robotized articulated arm of the automated finishing station of figures 1 and 2 and carrying two braking elements to be finished/worked;
- Figure 9 shows schematically, and in an enlarged scale in comparison with figure 1, a three-quarter axonometric view from above of a robotized articulated arm which is one of the main components of the automated finishing station of figures 1 and 2 and which carries the tool of figure 8;
- Figure 10 shows schematically, and in an enlarged scale in comparison with figure 1, a three-quarter axonometric view from above of details of the automated finishing station of figure 1 constituting a sub-station of the same; and
- Figure 11 shows schematically orthogonal plant views from above and corresponding side views of finished vehicle brake elements, as well as details of respective sectional view thereof, worked by means of the automated finishing station of figure 1.

### Detailed Description

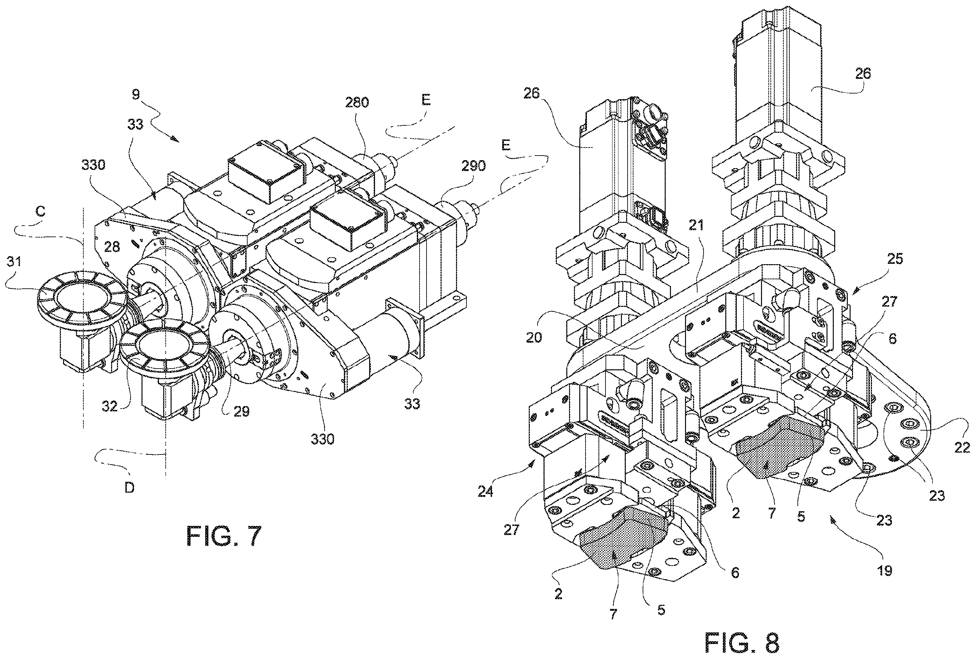

With reference to figures from 1 to 11, the reference number 1 indicates as a whole an automated finishing station for vehicle braking elements 2 like a brake shoe or a brake pad, a couple of which are shown schematically, in a perspective view, in figure 8.

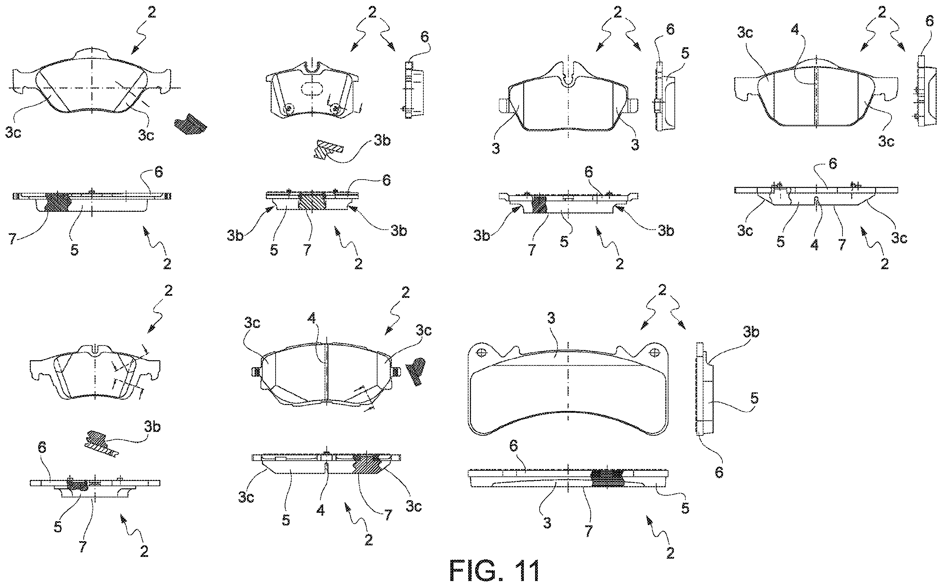

The finishing station 1 is configured for carrying out chamfers 3 and/or slots 4 (figure 11) on a block 5 of friction material carried by a (normally metallic) support 6, the block 5 of friction material and the support 6 forming together one vehicle braking element 2.

A number of braking elements 2, constituted by brake pads, are shown in figure 11, having different finishing, namely having their side edges provided with chamfers 3 of different shape and/or arranged in a different position, and/or having a central and transverse slot 4 provided on a first face 7 of the friction material block 5, opposite to the support 6 and facing in use towards the element to be braked (e.g. a brake disc).

In particular, chamfers 3b are known as J-chamfers and chamfer 3c are flat chamfers and may have different inclinations with respect to the support 6, which is normally a flat plate. The brake elements 2 may be in themselves of different dimension and shape, depending on the vehicle they are designed to work with.

Braking elements 2 shown in figure 8 are still to be finished and any chamfer or slot is therefore missing.

The automated finishing station 1 comprises at least one robotized articulated arm 8 (also indicated herein below simply as "robot 8") and at least one first grinding machining module 9 (also indicated herein below simply as "grinding module 9") configured to remove/ablate part of the friction material block 5 on the side of the first face 7 thereof to obtain on such friction material block 5 one or more chamfers 3 (e.g. 3b or 3c) and/or slots 4 of pre-established shape.

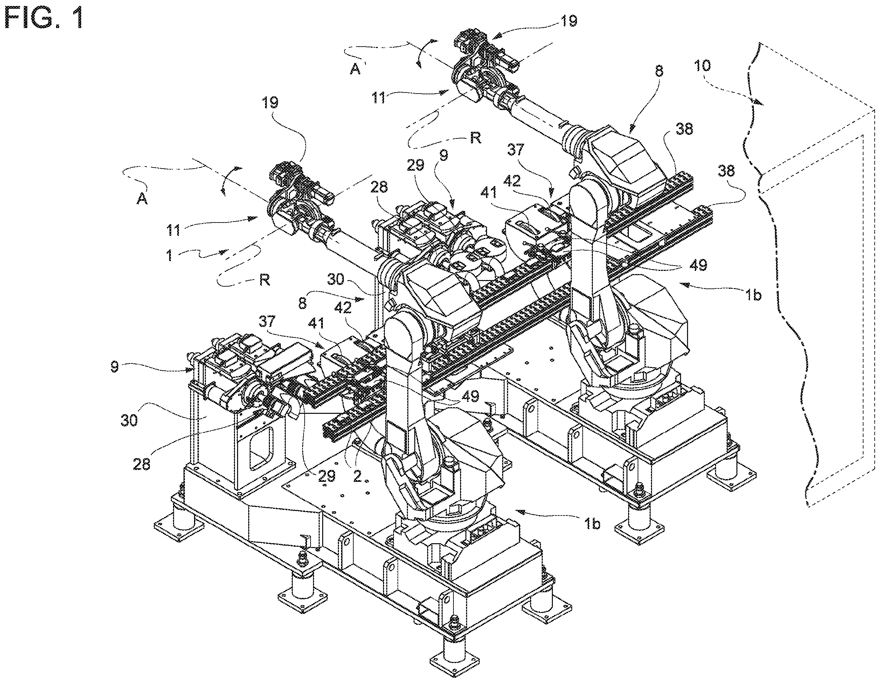

According to one preferred embodiment of the invention, the finishing station 1 is formed by the coupling of two identical sub-stations 1b as schematically shown in figure 1, arranged side by side and preferably surrounded by a protection cabin 10 (known and shown in part only for sake of simplicity).

Each sub-station 1b constitutes a complete finishing station according to the invention according to the simplest embodiment thereof. Accordingly, the following description will refer either to one single finishing sub-station 1b or to the whole finishing station 1 without losing in generality.

The at least one robotized articulated arm 8 may be of a known type and comprises a motorized head 11 rotating around a first axis A (this first axis A is the sixth numerically controlled axis of robot 8, counting its six numerically controlled axes in ascending sequence from the base to the wrist, as usual in a commercial robot, as the robotized articulated arm 8 is).

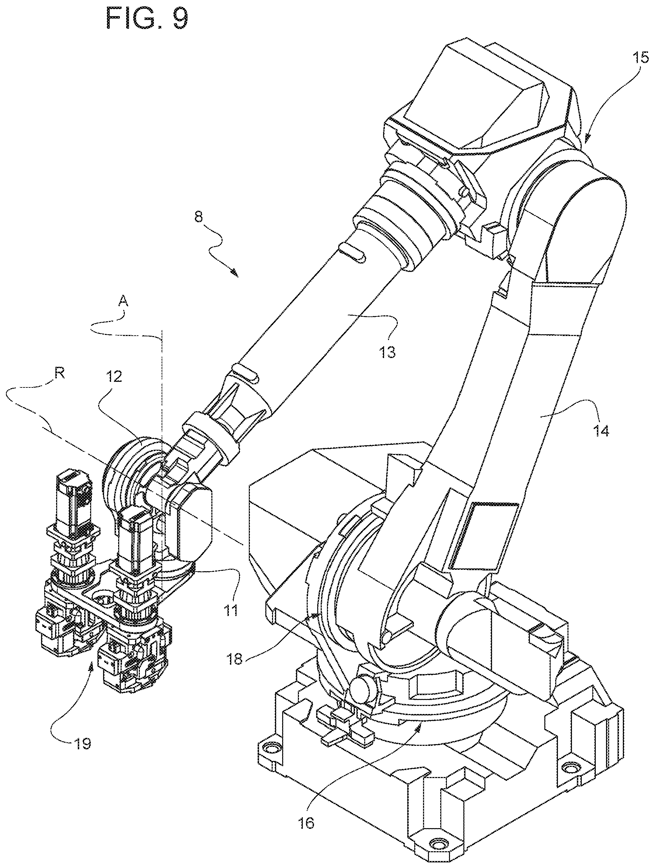

Preferably, the at least one robotized articulated arm 8 has six numerically controlled axes, including the first axis A; in particular, the motorized rotating head 11 may be supported by a motorized rotating joint 12 (figure 9) - which is the fifth numerically controlled axis of robot 8, according to the usual sequence used for commercial robots like robot 8 is - able to rotate the head 11 around an axis R perpendicular to the first axis A, as shown in figures 1 and 9, wherein head 11 is arranged in two different positions in which its axis A is oriented, respectively, horizontal (figure 1) and vertical (figure 9).

Generally speaking, the robotized articulated arm 8 comprises (figure 9) two straight elements 13 and 14 connected to each other by a motorized joint 15, a motorized rotating base 16 and a further motorized rotating joint 18 connecting the base 16 with the straight element 14 more distant from the head 11.

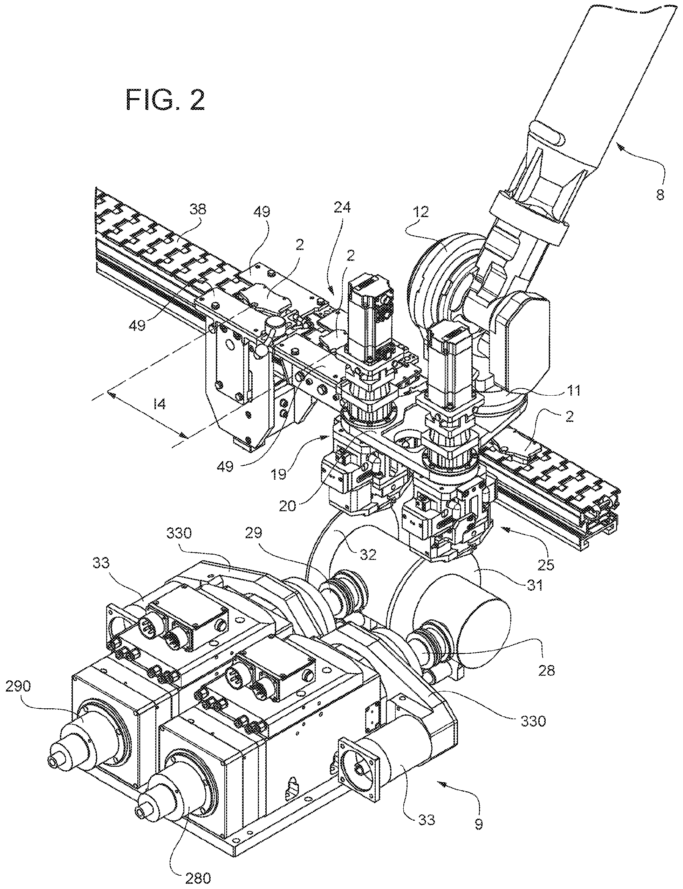

According to a first aspect of the present invention, the head 11 carries a tool 19, better shown in enlarged scale in figures 2, 4 and 8.

The tool 19 comprises a rigid plate 20 having in plant view an "Y" shape, since plate 20 has two opposite ends 21,22 (figure 8) of different width connected by tapering edges of preferably a curved configuration, so forming in plant view a sort of "deformed" triangle resembling just the shape of the capital Y.

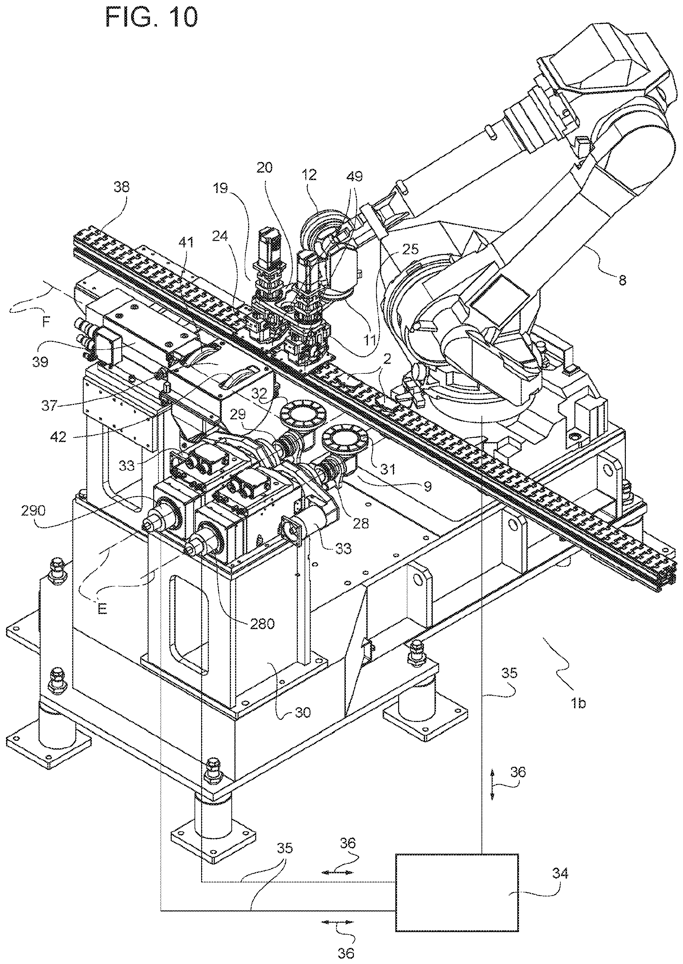

Plate 20 is attached integral to head 11 by means of its narrower end 22, e.g. by bolts (not shown) and is arranged substantially perpendicular to the first axis A. At this purpose, end 22 is provided with a crown of suitable seats 23 arranged in a circle around axis A and therefore plate 20 is compelled to rotate around axis A together with head 11. Accordingly, end 21 may be also rotated around axis A, eccentrically therefrom. See e.g. figures 1 and 10 wherein plate 20 and end 21 appear to be rotated by 90°.

According to one aspect of the invention, the rigid plate 20 carries at end 20 a first motorized holding device 24 and a second motorized holding device 25, identical to each other and arranged side by side at opposite side edged of end 21.

Each first and second motorized holding device 24, 25 comprises (figure 8) a motor 26 carried integral by the rigid plate 20 and a clamping assembly 27 configured to hold one vehicle braking element 2, so as the tool 19 is configured to carry on simultaneously two vehicle braking elements 2 at a time.

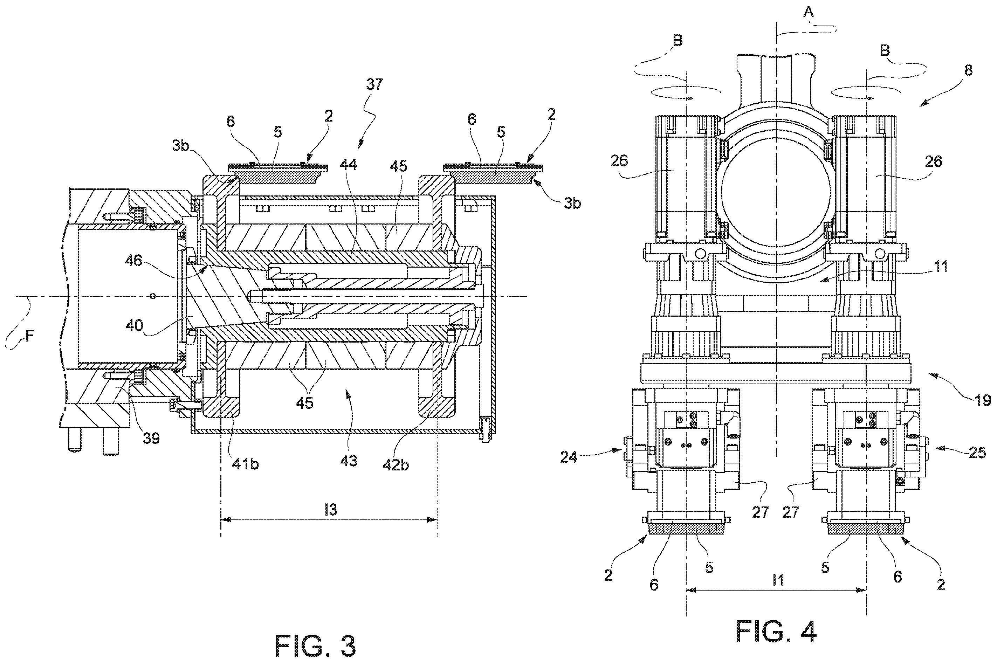

Moreover, the clamping assembly 27 of each first and second holding device 24, 25 is configured to be rotated by the corresponding motor 26, to the exit shaft (not shown) of which it is angularly connected, around a respective second axis B (figure 4).

The two second axes B of the first and of the second holding device 24, 25 (figure 4) are parallel to each other and to the first axis A and are arranged side by side, spaced apart with a first interaxis I1, i.e. at a distance I1 from each other and there between.

The second axes B are moreover arranged eccentrically to the first axis A and the first and second holding device 24,25 are configured to be operable independently of each other by the two independent motors 26.

The clamping assembly 27 of each first and second holding device 24, 25 is configured to hold one of the vehicle braking element 2 to be finished at a time by/at the support 6 thereof and on the side opposite to the first face 7 of the friction material block 5 thereof, keeping the first face 7 always parallel to the rigid plate 20 and facing towards the first grinding module 9.

According to a further aspect of the invention and in combination with the tool 19 described above, the first grinding module 9 comprises a first motorized head 28 and a second motorized head 29, both carried by a first stationary base 30 (figures 1 and 10) arranged in proximity to the robotized articulated arm 8, i.e. well within its range of action, so as to be easily and quickly reachable by the head 11.

The first motorized head 28 supports one respective first motorized grinding wheel 31 rotating around a third axis C (figure 7) which is also the axis of symmetry thereof, and the second motorized head 29 supports one respective second grinding wheel 32 rotating around a fourth axis D, which is as well the axis of symmetry thereof.

Heads 28 and 29 are known as "angle heads", since they are not directly motorized, but receive the motion from respective motorized spindles 280, 290 (figures 2 and 7) by means of a pair of gears (known and not shown for sake of simplicity) that transfer motion to the grinding wheels 31, 32 let them to rotate around the axis C and D, respectively.

According to an aspect of the invention, the first and second "motorized" head 28, 29 are also rotatable, and configured to be rotated by respective motors 33 each around a respective fifth axis E (figure 7).

In the non-limiting embodiment shown, the motors 33 are arranged each laterally the corresponding axis E and transmit the motion to the angle heads 28,29, rotating them independently of each other, each around one axis E, via a transmission gear 330 (known and not shown in details for sake of simplicity), so being able to also tilt of any angle the corresponding axis C, D.

The two axes E of the two motorized heads 28, 29 are in fact arranged side by side and parallel to each other and are perpendicular to the third and fourth axis C, D of rotation of the respective first and second grinding wheel 31, 32.

Moreover, according to a non-minor aspect of the invention, the fifth axes E are spaced apart with a second interaxis I2, i.e. by a distance measure perpendicularly to each other, identical to the first interaxis I1, i.e. the distance comprised between the couple of second axes B of the first and second holding device 24, 25, measured perpendicularly thereof.

The first and second angle head 28, 29 are rotatable around the respective fifth axes E independently of each other owing to the couple of different and independent motors 33, so that the first grinding module 9 is configured to rotate the first and second motorized angle head 28, 29 by pre-established angles up to 90° or even 180°, identical or different to each other, in response to signals of a control unit 34 (figure 10).

The control unit 34 is an integral part of the automated finishing station 1 according to the invention and may serve both the sub-stations 1b or, in an embodiment not shown, the automated finishing station 1 may comprise two control units 34, one of each sub-station 1b.

The control unit 34 is connected to the at least one robotized articulated arm 8 and the at least one first grinding module 9 (with those of both the sub-stations 1b in the embodiment shown) via data cables 35, and controls the same via control signals 36 which run along the data cables 35.

The control unit 34 is configured to operate the robotized articulated arm 8 and to simultaneously rotate the first and second motorized holding devices 24, 25 and the first and second motorized heads 28, 29 of the first grinding module 9 provided with the respective first and second rotating grinding wheels 31, 32 in order to obtain on the block 5 of friction material a plurality of chamfers 3, in particular the flat chamfers 3c, of predetermined shape and in predetermined positions along respective sides of the block 5 of friction material.

In this manner, according to an important aspect of the invention, it is possible to perform chamfers in any position, and for obtaining the flat chamfer(s) it is possible to decide to obtain any angle with respect to the axis of the brake pad and any angle with respect to the backplate surface.

It is also evident, especially looking at the configuration shown in figure 2, that it would eventually be possible to obtain also slots 4 on face 7 by rotating in a suitable position the rotatable holding devices 24,25 and rotating of the same angle (e.g. 90°) and in the same direction the rotatable heads 28,29 and by providing the latter with grinding wheels 31, 32 of suitable shape, e.g. of thinner thickness with respect to the grinding wheels shown in figures 7 and 10.

According to a further aspect of the invention, the automated finishing station 1 (in the embodiment shown both its sub-stations 1b) comprises, in combination with the first grinding module 9, a second grinding module 37 arranged side by side the first grinding module 9; both grinding modules 9, 37 are moreover arranged in front of the robotized articulated arm 8, as shown in figures 1 and 10.

The automated finishing station 1 further comprises at least one conveyor 38 arranged between the robotized articulated arm 8 and the first and second grinding modules 9, 37 (figures 2 and 10).

In the embodiment shown in figure 1 the finishing station 1 comprises two identical conveyors 38arranged side by side between the two robots 8 on one side and the two couples of grinding modules 9, 37 on the other side, constituting the two sub-stations 1b.

In any case, the (each) conveyor 38 is configured to transport a plurality of vehicle braking elements 2 in a row along an empty space delimited between the robotized articulated arm 8 and the first and second grinding modules 9,37 of either a complete finishing station 1 or both sub-stations 1b.

The (each) second grinding module 37 (figures 3, 5 and 6) comprises a second stationary base 39 carrying a motorized shaft 40 rotating around a sixth axis F which also corresponds to its own axis of symmetry and which is arranged perpendicular to the fifth axes E.

The shaft 40 carries in a removable manner and side by side one third and one fourth grinding wheel, 41 and 42 respectively, assembled angularly rigid thereto and spaced apart from each other (figure 3) with a third interaxis I3, i.e. at a distance there between measured at the middle portions thereof.

According to one aspect of the invention, the third interaxis I3 is identical to the first and second interaxes I1 and I2.

The third and fourth grinding wheels 41, 42 are compelled to rotate around the sixth axis F together, at the same speed, being both angularly coupled with the shaft 40.

Shaft 40 is moreover equipped with a quick assembly bearing unit 43 to connect the third and fourth grinding wheels 41, 42 to the shaft 40.

With reference to figure 3, the quick assembly bearing unit 43 comprises a tubular spindle 44 arranged coaxial with shaft 40 and configured to carry thereon the third and fourth grinding wheels 41, 42 angularly rigid thereto.

A number of spacers 45 are also carried by the spindle 44 to block the third and fourth grinding wheels 41, 42 together at the third interaxis I3.

Finally, the quick assembly bearing unit 43 comprises a quick connection device 46 to angularly connect head to head the spindle 44 to the shaft 40; this quick connection device 46 is preferably of the Morse taper type, as shown in figure 3.

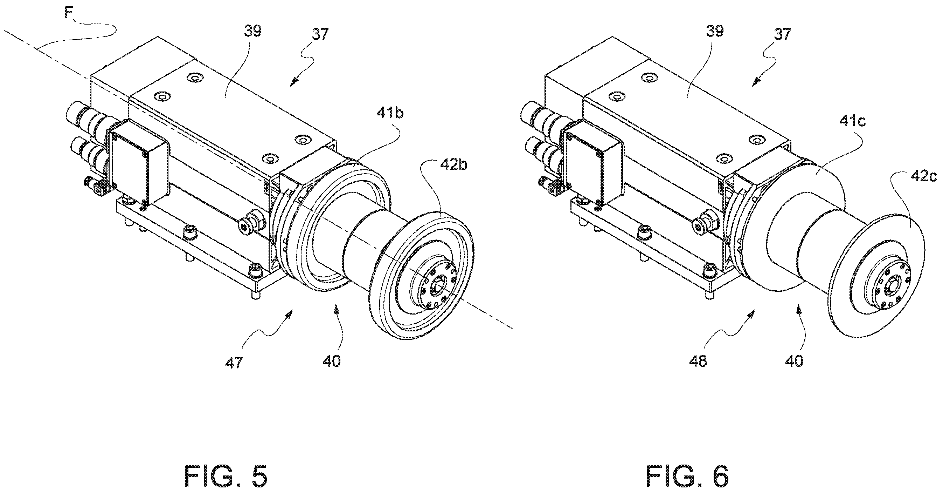

According to a further aspect of the invention, the automated finishing station 1 (or each of both the sub-stations 1b) comprises two sets 47, 48 of third and fourth grinding wheels 41, 42 (figures 5, 6) interchangeably connectable to the motorized shaft 40.

The first set 47 includes a couple of grinding wheels 41b, 42b configured to obtain J-chamfers (as shown in figure 3) onto the blocks 5 of friction material of a pair of braking elements 2 to be finished held by the paired holding devices 24,25 as shown in figure 4.

The second set 48 includes a couple of grinding wheels 41c, 42c configured to obtain a slot 4 (so thinner than grinding wheels 41b, 42b) on the first face 7 of the friction material block 5 of a pair of braking elements 2 to be finished held by the paired holding devices 24,25 as shown in figure 4.

Depending on the shape of the grinding wheels 41b, 42b the obtained J chamfers may have different radius. Likewise slots can have different thickness and shape e.g. "U" shape and "V" shape, depending on the shape of the grinding wheels 41c, 42c.

As already mentioned, the automated finishing station 1 in its preferred embodiment comprises two robotized articulated arms 8 arranged side by side, each one served by a respective conveyor 38 and by a corresponding first and a second grinding modules 9, 37 arranges side by side in front of the corresponding robotized articulated arm 8 and on the side opposite thereto with reference to the corresponding conveyor 38, to form two paired sub-stations 1b working simultaneously.

Preferably, the (each) conveyor 38 is an endless belt conveyor of any known type, as schematically shown in figures 1, 2 and 10.

According to a further aspect of the invention, the (each) conveyor 38 is provided with two pairs of positioning templates 49 for the vehicle braking elements 2 arranged in sequence, in tandem, along the conveyor 38 and operating on both sides thereof.

Each pair of positioning templates 49 is spaced apart by the other by a fourth interaxis I4 (figure 2) identical to the first interaxis I1, the fourth interaxis I4 being set between the middle portions of a pair of brake pads 2 blocked by the pair of templates 49 arranged side by side along the conveyor 38.

From what described until now, it is clear that the present invention also relates to a method for obtaining chamfers 3 and/or slots 4 on a block 5 of friction material carried by a support 6, the block 5 of friction material and the support 6 forming a vehicle braking element 2, the method being carried out by the finishing station 1 described above, by operating the at least one (both) robotized articulated arm 8 provided (each) with the tool 19 such as to manipulate two vehicle braking element 2 at a time to bring them simultaneously in contact with a respective pair of first and second grinding wheel 31, 32 or of third and fourth grinding wheel 41, 42 (see figures 2 and 3) arranged side by side with an interaxis there between identical to a first interaxis at which the tool 19 holds the two vehicle braking element 2 at a time.

With the embodiment shown in figure 1, having two robotized articulated arms 8 and corresponding pairs of grinding modules 9, 37 it is clear that it is possible to obtain in sequence on the same braking elements 2 both chamfers 3 and slots 4.

In particular, J-chamfers may be obtained by means of module 37 equipped with grinding wheels 41b, 42b, while flat chamfers and/or slots may be obtained rotating in a suitable manner both the tool 19 by the head 11 and the two holding devices 24, 25 supported thereby, and by rotating simultaneously the two motorized heads 28, 29, provided that the module 9 is provided with grinding wheels of suitable shape and thickness.

In case the module 37 is used to provide both J-chamfers and slots, this will be made possible by replacing the grinding wheels 41b, 42b with grinding wheels 41c, 42c, operation made quick, easy and possible by the quick release and assembly bearing unit 43.

All the aims of the present disclosure are therefore fulfilled.

### Certain Terminology

Although certain braking devices, systems, and methods have been disclosed in the context of certain example embodiments, it will be understood by those skilled in the art that the scope of this disclosure extends beyond the specifically disclosed embodiments to other alternative embodiments and/or uses of the embodiments and certain modifications and equivalents thereof, like brake shows for braking systems based on brake drums. Use with any structure is expressly within the scope of this invention, as defined by the claims. The scope of this disclosure should not be limited by the particular disclosed embodiments described herein, but is limited by the scope defined by the claims.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Unless stated otherwise, the terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. Likewise, the term "generally" as used herein represents a value, amount, or characteristic that predominantly includes or tends toward a particular value, amount, or characteristic.

## Claims

1. An automated finishing station (1) for vehicle braking elements (2) like a brake shoe or a brake pad, configured for carrying out chamfers and/or slots on a block (5) of friction material carried by a support (6), the block of friction material and the support forming a vehicle braking element (2), the automated finishing station (1) comprising at least one robotized articulated arm (8) and at least a first grinding module (9) configured to remove/ablate part of the friction material block (5) on the side of a first face (7) thereof to obtain on such friction material block one or more chamfers (3) and/or slots (4) of pre-established shape; **characterized in that,** in combination:
i)- the robotized articulated arm (8) comprises a head (11) rotating around a first axis (A);
ii)- the said head (11) carries a tool (19) comprising a rigid plate (20) attached integral to said head (11) and arranged substantially perpendicular to said first axis (A), the rigid plate (20) carrying a first and a second motorized holding device (24,25), the motorized holding devices being arranged side by side;
iii)- each said first and second motorized holding device (24,25) comprising a motor (26) carried integral by said rigid plate (20) and a clamping assembly (27) configured to hold one said vehicle braking element (2), so as said tool (19) is configured to carry on simultaneously two said vehicle braking elements (2),
iv)- the clamping assembly (27) of each said first and second holding device (24,25) being configured to be rotated by the corresponding said motor (26) around a respective second axis (B), the second axes (B) of the first and of the second holding device being parallel to each other and to the first axis (A) and being arranged side by side, spaced apart with a first interaxis (I1), i.e. a distance there between, the second axes (B) being arranged eccentrically to the first axis (A), the first and second holding device (24,25) being operable independently of each other by said motors (26);
v)- the clamping assembly (27) of each said first and second holding device (24,25) being configured to hold one said vehicle braking element (2) at a time by the support (6) thereof and on the side opposite to said first face (7)n of the friction material block (5) thereof, keeping said first face (7) parallel to said rigid plate (20) and facing towards said first grinding module (9);
vi)- said first grinding module (9) comprises a first and a second motorized head (28,29) carried by a first stationary base (30) arranged in proximity to the robotized articulated arm (8), the first motorized head (28) supporting one respective first grinding wheel (31) rotating around a third axis (C) which is its own axis of symmetry, and the second motorized head (29) supporting one respective second grinding wheel (32) rotating around a fourth axis (D) which is its own axis of symmetry;
vii) the first and second motorized head (28,29) being rotatable around respective fifth axes (E) arranged side by side and parallel to each other and perpendicular to the third (C) and fourth (D) axis of rotation of the respective first and second grinding wheel;
viii) the fifth axes (E) being spaced apart with a second interaxis (I2), i.e. a distance from each other, identical to said first interaxis (I1), i.e. the distance comprised between the second axes (B) of the first and second holding device (24,25).

2. The automated finishing station according to claim 1, **characterized in that** said first and second motorized head (28,29) are rotatable around the respective fifth axes (E) independently of each other, the first grinding module (9) being configured to rotate the first and second motorized head (28,29) by pre-established angles up to 90° or 180°, identical or different to each other, in response to signals (36) of a control unit (34).

3. The automated finishing station according to anyone of the preceding claims, **characterized in that** it comprises a control unit (34) for said at least one robotized articulated arm (8) and for said the at least one first grinding module (9); the control unit (34) being configured to operate the robotized articulated arm (8) and to simultaneously rotate the said first and second motorized holding devices (24,25) and the first and second motorized heads (28,29) of said first grinding module (9) provided with respective first and second rotating grinding wheels (31,32) in order to obtain on said block (5) of friction material a plurality of chamfers (3) of predetermined shape and in predetermined positions along respective sides of the block (5) of friction material.

4. The automated finishing station according to anyone of the preceding claims, **characterized in that** it further comprises a second grinding module (37) arranged side by side the first grinding module (9) and in front of said robotized articulated arm (8); the automated finishing station further comprising at least one conveyor (38) arranged between said robotized articulated arm (8) and said first and second grinding modules (9,37) and configured to transport a plurality of vehicle braking elements (2) in a row along an empty space delimited between said robotized articulated arm (8) and said first and second grinding modules (9,37).

5. The automated finishing station according to claim 4, **characterized in that** the second grinding module (37) comprises a second stationary base (39) carrying a motorized shaft (40) rotating around a sixth axis (F), corresponding to its own axis of symmetry and arranged perpendicular to said fifth axes (E); said shaft (40) carrying in a removable manner and side by side one third and one fourth grinding wheel (41,42) angularly rigid thereto and spaced apart with a third interaxis (i3), i.e. at a distance there between, identical to the first and second interaxes (I1,I2); the third and fourth grinding wheels (41,42) being compelled to rotate around the sixth axis (F) together, at the same speed; and the said shaft (40) being equipped with a quick assembly bearing unit (43) to connect said third and fourth grinding wheels (41,42) to said shaft (40).

6. The automated finishing station according to claim 5, **characterized in that** said quick assembly bearing unit (43) comprises: a tubular spindle (44) arranged coaxial with said shaft (40) and configured to carry said third and fourth grinding wheels (41,42) angularly rigid thereto; a number of spacers (45) carried by the spindle (44) to block the third and fourth grinding wheels (41,42) together at the third interaxis (I3); and a quick connection device (46) to angularly connect head to head the spindle (44) to the shaft (40), said quick connection device (46) being preferably of the Morse taper type.

7. The automated finishing station according to claim 5 or 6, **characterized in that** it comprises two sets (47,48) of said third (41b,41c) and fourth (42b,42c) grinding wheels interchangeably connectable to said motorized shaft (40): a first set (47) configured to obtain J-chamfers onto said blocks (5) of friction material and a second set (48) configured to obtain a slot (4) on said first face (7) of the friction material block.

8. The automated finishing station according to anyone of the preceding claims, **characterized in that** said at least one robotized articulated arm (8) has six numerically controlled axes, including said first axis (A); and **in that** the automated finishing station (1) comprises two said robotized articulated arms (8) arranged side by side, each one served by a respective conveyor (38) and by a first and a second grinding modules (9,37) arranges side by side in front of the corresponding robotized articulated arm (8) and on the side opposite thereto with reference to the corresponding conveyor (38).

9. The automated finishing station according to claim 8, **characterized in that** each said conveyor (38) is an endless belt conveyor and is provided with two pairs of positioning templates (49) for said vehicle braking elements (2) arranged in sequence, in tandem, along the conveyor (38) and operating on both sides thereof, the pairs of positioning templates (49) being spaced apart by a fourth interaxis (I4) identical to said first interaxis (I1).

10. A method for obtaining chamfers (3) and/or slots (4) on a block (5) of friction material carried by a support (6), the block of friction material and the support forming a vehicle braking element (2), the method being **characterized by** the fact it is carried out by the finishing station (1) according to anyone of the preceding claims operating said at least one robotized articulated arm (8) provided with said tool (19) such as to manipulate two said vehicle braking element (2) at a time and bring them simultaneously in contact with a respective pair of a first and a second grinding wheel (31,32) or of a third and a fourth grinding wheel (41,42) arranged side by side with an interaxis there between identical to a first interaxis (I1) to which the tool (19) holds said two vehicle braking elements (2) at a time.

## Patentansprüche

1. Eine automatisierte Endbearbeitungsstation (1) für Fahrzeugbremselemente (2) wie eine Bremsbacke oder ein Bremsbelag, die zum Ausführen von Abschrägungen und/oder Schlitzen an einem Block (5) aus Reibungsmaterial konfiguriert ist, der von einem Träger (6) getragen wird, wobei der Block aus Reibungsmaterial und der Träger ein Fahrzeugbremselement (2) bilden, wobei die automatisierte Endbearbeitungsstation (1) mindestens einen Robotergelenkarm (8) und mindestens ein erstes Schleifmodul (9) umfasst, das dazu konfiguriert ist, einen Teil des Blocks (5) aus Reibungsmaterial auf der Seite einer ersten Fläche (7) zu entfer-nen/abzutragen, um dadurch einen Block aus Reibungsmaterial mit einer oder mehreren Abschrägungen (3) und/oder Schlitzen (4) mit vorbestimmter Form zu erhalten; **dadurch gekennzeichnet, dass** in Kombination:
i)- der Robotergelenkarm (8) einen Kopf (11) umfasst, der sich um eine erste Achse (A) dreht;
ii)- der Kopf (11) ein Werkzeug (19) trägt, das eine starre Pla<e (20) umfasst, die integral an dem Kopf (11) angebracht und im Wesentlichen senkrecht zu der ersten Achse (A) angeordnet ist, wobei die starre Pla<e (20) eine erste und eine zweite motorisierte Haltevorrichtung (24, 25) trägt, wobei die motorisierten Haltevorrichtungen nebeneinander angeordnet sind;
iii)- jede erste und zweite motorisierte Haltevorrichtung (24, 25) einen Motor (26) umfasst, der integral durch die starre Pla<e (20) getragen wird, und eine Klemmanordnung (27) umfasst, die dazu konfiguriert ist, das Fahrzeugbremselement (2) zu halten, so dass das Werkzeug (19) dazu konfiguriert ist, gleichzeitig zwei der Fahrzeugbremselemente (2) zu tragen,
iv)- wobei die Klemmanordnung (27) jeder ersten und zweiten Haltevorrichtung (24, 25) dazu konfiguriert ist, durch den entsprechenden Motor (26) um eine jeweilige zweite Achse (B) gedreht zu werden, wobei die zweiten Achsen (B) der ersten und der zweiten Haltevorrichtung parallel zueinander und zu der ersten Achse (A) sind und nebeneinander, beabstandet mit einem ersten Achsabstand (I1), d. h. einem Abstand dazwischen, angeordnet sind, wobei die zweiten Achsen (B) exzentrisch zu der ersten Achse (A) angeordnet sind, wobei die erste und die zweite Haltevorrichtung (24, 25) unabhängig voneinander durch die Motoren (26) betätigbar sind;
v)- die Klemmanordnung (27) jeder ersten und zweiten Haltevorrichtung (24, 25) dazu konfiguriert ist, das Fahrzeugbremselement (2) zu einem Zeitpunkt mit dem Träger (6) und auf der Seite gegenüber der ersten Fläche (7) des Blocks (5) aus Reibmaterial zu halten, wobei die erste Fläche (7) parallel zu der starren Pla<e (20) gehalten wird und dem ersten Schleifmodul (9) zugewandt ist,
vi)- das erste Schleifmodul (9) einen ersten und einen zweiten motorisierten Kopf (28, 29) umfasst, die von einer ersten stationären Basis (30) getragen werden, die in der Nähe des Robotergelenkarms (8) angeordnet ist, wobei der erste motorisierte Kopf (28) eine erste Schleifscheibe (31) trägt, die sich um eine dri<e Achse (C) dreht, die ihre eigene Symmetrieachse ist, und wobei der zweite motorisierte Kopf (29) eine zweite Schleifscheibe (32) trägt, die sich um eine vierte Achse (D) dreht, die ihre eigene Symmetrieachse ist;
vii)- wobei der erste und der zweite motorisierte Kopf (28, 29) um jeweilige fünEe Achsen (E) drehbar sind, die nebeneinander und parallel zueinander und senkrecht zu der dri<en (C) und vierten (D) Drehachse der ersten und zweiten Schleifscheibe angeordnet sind;
viii)- wobei die fünEen Achsen (E) mit einem zweiten Achsabstand (I2), d. h. einem Abstand voneinander, der mit dem ersten Achsabstand (I1) identisch ist, d.h. dem Abstand, der zwischen den zweiten Achsen (B) der ersten und zweiten Haltevorrichtung (24, 25) eingehalten ist, beabstandet sind.

2. Die automatisierte Endbearbeitungsstation nach Anspruch 1, **dadurch gekennzeichnet, dass** der erste und der zweite motorisierte Kopf (28, 29) unabhängig voneinander um die jeweiligen fünEen Achsen (E) drehbar sind, wobei das erste Schleifmodul (9) dazu konfiguriert ist, den ersten und zweiten motorisierten Kopf (28, 29) in Reaktion auf Signale (36) einer Steuereinheit (34) um vorab festgelegte Winkel von bis zu 90° oder 180°, identisch oder voneinander verschieden, zu drehen.

3. Die automatisierte Endbearbeitungsstation nach einem der vorhergehenden Ansprüche, **dadurch gekennzeichnet, dass** sie eine Steuereinheit (34) für den mindestens einen Robotergelenkarm (8) und für das mindestens eine erste Schleifmodul (9) umfasst; wobei die Steuereinheit (34) dazu konfiguriert ist, den Robotergelenkarm (8) zu betreiben und gleichzeitig die erste und die zweite motorisierte Haltevorrichtung (24, 25) und den ersten und den zweiten motorisierten Kopf (28, 29) des ersten Schleifmoduls (9), die mit jeweiligen ersten und zweiten rotierenden Schleifscheiben (31, 32) versehen sind, zu drehen, um auf dem Block (5) aus Reibmaterial eine Vielzahl von Abschrägungen (3) mit vorbestimmter Form und in vorbestimmten Positionen entlang jeweiliger Seiten des Blocks (5) aus Reibmaterial zu erhalten.

4. Die automatisierte Endbearbeitungsstation nach einem der vorhergehenden Ansprüche, **dadurch gekennzeichnet, dass** sie ferner ein zweites Schleifmodul (37) umfasst, das Seite an Seite mit dem ersten Schleifmodul (9) und vor dem Robotergelenkarm (8) angeordnet ist; wobei die automatisierte Endbearbeitungsstation ferner mindestens einen Förderer (38) umfasst, der zwischen dem Robotergelenkarm (8) und dem ersten und dem zweiten Schleifmodul (9, 37) angeordnet ist und der dazu konfiguriert ist, eine Vielzahl von Fahrzeugbremselementen (2) in einer Reihe entlang eines leeren Raums zu transportieren, der von dem Robotergelenkarm (8) und dem ersten und dem zweiten Schleifmodul (9, 37) begrenzt ist.

5. Die automatisierte Endbearbeitungsstation nach Anspruch 4, **dadurch gekennzeichnet, dass** das zweite Schleifmodul (37) eine zweite stationäre Basis (39) umfasst, die eine motorisierte Welle (40) trägt, die sich um eine sechste Achse (F) dreht, die ihrer eigenen Symmetrieachse entspricht und senkrecht zu den fünEen Achsen (E) angeordnet ist; wobei die Welle (40) auf abnehmbare Weise und Seite an Seite eine dri<e und eine vierte Schleifscheibe (41, 42) trägt, die winklig dazu starr und mit einem dri<en Achsabstand (I3) beabstandet sind, d. h. in einem Abstand dazwischen, der identisch mit dem ersten und dem zweiten Achsabstand (I1, I2) ist; wobei die dri<en und vierten Schleifscheiben (41, 42) um die sechste Achse (F) zusammen mit der gleichen Geschwindigkeit drehbar sind; und wobei die Welle (40) mit einer Schnellmontagelagereinheit (43) ausgesta<et ist, um die dri<en und vierten Schleifscheiben (41, 42) mit der Welle (40) zu verbinden.

6. Die automatisierte Endbearbeitungsstation nach Anspruch 5, **dadurch gekennzeichnet, dass** die Schnellmontagelagereinheit (43) Folgendes umfasst: eine rohrförmige Spindel (44), die koaxial mit der Welle (40) angeordnet ist und dazu konfiguriert ist, das dri<e und vierte Schleifrad (41, 42) winklig dazu starr zu tragen; eine Anzahl von Abstandshaltern (45), die von der Spindel (44) getragen werden, um das dri<e und das vierte Schleifrad (41, 42) mit dem dri<en Achsabstand (I3) festzulegen; und eine Schnellverbindungsvorrichtung (46), um die Spindel (44) gegenüberliegend mit der Welle (40) zu verbinden, wobei die Schnellverbindungsvorrichtung (46) vorzugsweise vom Morsekegeltyp ist.

7. Die automatisierte Endbearbeitungsstation nach Anspruch 5 oder 6, **dadurch gekennzeichnet, dass** sie zwei Sätze (47, 48) der dri<en (41b, 41c) und vierten (42b, 42c) Schleifscheiben umfasst, die austauschbar mit der motorisierten Welle (40) verbindbar sind: wobei ein erster Satz (47) dazu konfiguriert ist, J-Fasen an den Blöcken (5) aus Reibmaterial anzubringen, und wobei ein zweiter Satz (48), dazu konfiguriert ist, einen Schlitz (4) in die erste Fläche (7) des Blocks aus Reibmaterial einzubringen.

8. Die automatisierte Endbearbeitungsstation nach einem der vorhergehenden Ansprüche, **dadurch gekennzeichnet, dass** der mindestens eine Robotergelenkarm (8) sechs numerisch gesteuerte Achsen aufweist, einschließlich der ersten Achse (A); und dass die automatisierte Endbearbeitungsstation (1) zwei Robotergelenkarme (8) umfasst, die nebeneinander angeordnet sind, wobei jede von einem jeweiligen Förderer (38) bedient wird, und dass ein erstes und ein zweites Schleifmodul (9, 37) nebeneinander vor dem entsprechenden Robotergelenkarm (8) und auf der diesem gegenüberliegenden Seite mit Bezug auf den entsprechenden Förderer (38) angeordnet sind.

9. Die automatisierte Endbearbeitungsstation nach Anspruch 8, **dadurch gekennzeichnet, dass** jeder Förderer (38) ein Endlosbandförderer ist und mit zwei Paaren von Positionierungsschablonen (49) für die Fahrzeugbremselemente (2) versehen ist, die paarweise aneinandergereiht entlang des Förderers (38) angeordnet sind und auf beiden Seiten davon arbeiten, wobei die Paare von Positionierungsschablonen (49) mit einem vierten Achsabstand (I4) beabstandet sind, der mit dem ersten Achsabstand (I1) identisch ist.

10. Verfahren zum Erhalten von Fasen (3) und/oder Schlitzen (4) auf einem Block (5) aus Reibungsmaterial, der von einem Träger (6) getragen wird, wobei der Block aus Reibungsmaterial und der Träger ein Fahrzeugbremselement (2) bilden, wobei das Verfahren **dadurch gekennzeichnet ist, dass** es mit der Endbearbeitungsstation (1) nach einem der vorhergehenden Ansprüche durchgeführt wird, die den mindestens einen Robotergelenkarm (8) betreibt, der mit dem Werkzeug (19) versehen ist, um gleichzeitig zwei Fahrzeugbremselemente (2) zu manipulieren und sie gleichzeitig in Kontakt mit einem jeweiligen Paar von ersten und zweiten Schleifscheiben (31, 32) oder dri<en und vierten Schleifscheiben (41, 42) zu bringen, die nebeneinander mit einem Achsabstand identisch zu einem ersten Achsabstand (I1) angeordnet sind, zu dem das Werkzeug (19) die zwei Fahrzeugbremselemente (2) zu einem Zeitpunkt hält.

## Revendications

1. Station de finition automatisée (1) pour des éléments de freinage de véhicule (2) tels qu'une mâchoire de frein ou une plaquette de frein, configurée pour réaliser des chanfreins et/ou des fentes sur un bloc (5) de matériau de friction porté par un support (6), le bloc de matériau de friction et le support formant un élément de freinage de véhicule (2), la station de finition automatisée (1) comprenant au moins un bras articulé robotisé (8) et au moins un premier module de broyage (9) configuré pour enlever/ablater une partie du bloc de matériau de friction (5) du côté d'une première face (7) de celui-ci afin d'obtenir sur ce bloc de matériau de friction un ou plusieurs chanfreins (3) et/ou fentes (4) de forme prédéfinie ; **caractérisée en ce que**, en combinaison :
i) - le bras articulé robotisé (8) comporte une tête (11) tournant autour d'un premier axe (A) ;
ii) - ladite tête (11) porte un outil (19) comportant une plaque rigide (20) solidaire de ladite tête (11) et disposée sensiblement perpendiculairement audit premier axe (A), la plaque rigide (20) portant un premier et un deuxième dispositifs de maintien motorisés (24, 25), les dispositifs de maintien motorisés étant disposés côte à côte ;
iii) - chacun desdits premier et deuxième dispositifs de maintien motorisés (24, 25) comportant un moteur (26) solidaire à ladite plaque rigide (20) et un ensemble de serrage (27) configuré pour maintenir l'un desdits éléments de freinage de véhicule (2), de sorte que ledit outil (19) est configuré pour porter simultanément deux desdits éléments de freinage de véhicule (2),
iv) - l'ensemble de serrage (27) de chacun desdits premier et deuxième dispositifs de maintien (24, 25) étant configuré pour être entraîné en rotation par ledit moteur correspondant (26) autour d'un deuxième axe respectif (B), les deuxièmes axes (B) des premier et deuxième dispositifs de maintien étant parallèles entre eux et au premier axe (A), et étant disposés côte à côte, espacés d'un premier interaxe (I1), c'est-à-dire d'une distance entre eux, les deuxièmes axes (B) étant disposés de manière excentrée par rapport au premier axe (A), les premier et deuxième dispositifs de maintien (24, 25) pouvant être actionnés indépendamment l'un de l'autre par lesdits moteurs (26) ;
v) - l'ensemble de serrage (27) de chacun desdits premier et deuxième dispositifs de maintien (24, 25) étant configuré pour maintenir un seul desdits éléments de freinage de véhicule (2) à la fois par son support (6) et du côté opposé à ladite première face (7)n du bloc de matériau de friction (5) de celui-ci, en maintenant ladite première face (7) parallèle à ladite plaque rigide (20) et tournée vers ledit premier module de broyage (9) ;
vi) - ledit premier module de broyage (9) comprend une première et une deuxième têtes motorisées (28, 29) portées par une première base fixe (30) disposée à proximité du bras articulé robotisé (8), la première tête motorisée (28) supportant une première roue de broyage (31) tournant autour d'un troisième axe (C) qui est son propre axe de symétrie, et la deuxième tête motorisée (29) supportant une deuxième roue de broyage (32) tournant autour d'un quatrième axe (D) qui est son propre axe de symétrie ;
vii) les première et deuxième têtes motorisées (28, 29) pouvant tourner autour de cinquièmes axes respectifs (E) disposés côte à côte et parallèles entre eux, et perpendiculaires aux troisième (C) et quatrième (D) axes de rotation des première et deuxième roues de broyage respectives ;
viii) les cinquièmes axes (E) étant espacés d'un deuxième interaxe (I2), c'est-à-dire d'une distance l'un par rapport à l'autre, identique audit premier interaxe (I1), c'est-à-dire la distance comprise entre les deuxièmes axes (B) des premier et deuxième dispositifs de maintien (24, 25).

2. Station de finition automatisée selon la revendication 1, **caractérisée en ce que** lesdites première et deuxième têtes motorisées (28, 29) peuvent tourner autour des cinquièmes axes respectifs (E) indépendamment l'une de l'autre, le premier module de broyage (9) étant configuré pour faire tourner les première et deuxième têtes motorisées (28, 29) selon des angles prédéfinis allant jusqu'à 90° ou 180°, identiques ou différents l'un de l'autre, en réponse à des signaux (36) provenant d'une unité de commande (34).

3. Station de finition automatisée selon l'une quelconque des revendications précédentes, **caractérisée en ce qu'**elle comprend une unité de commande (34) pour ledit au moins un bras articulé robotisé (8) et pour ledit au moins un premier module de broyage (9) ; l'unité de commande (34) étant configurée pour actionner le bras articulé robotisé (8) et pour faire tourner simultanément lesdits premier et deuxième dispositifs de maintien motorisés (24, 25) ainsi que les première et deuxième têtes motorisées (28, 29) dudit premier module de broyage (9) équipées respectivement d'une première et d'une deuxième roues de broyage rotatives (31, 32) afin d'obtenir sur ledit bloc (5) de matériau de friction une pluralité de chanfreins (3) de forme prédéterminée et dans des positions prédéterminées le long des côtés respectifs du bloc (5) de matériau de friction.

4. Station de finition automatisée selon l'une quelconque des revendications précédentes, **caractérisée en ce qu'**elle comprend en outre un deuxième module de broyage (37) disposé côte à côte avec le premier module de broyage (9) et en face dudit bras articulé robotisé (8) ; la station de finition automatisée comprenant en outre au moins un convoyeur (38) disposé entre ledit bras articulé robotisé (8) et lesdits premier et deuxième modules de broyage (9, 37) et configuré pour transporter une pluralité d'éléments de freinage de véhicule (2) en file indienne le long d'un espace libre délimité entre ledit bras articulé robotisé (8) et lesdits premier et deuxième modules de broyage (9, 37).

5. Station de finition automatisée selon la revendication 4, **caractérisée en ce que** le deuxième module de broyage (37) comprend une deuxième base fixe (39) portant un arbre motorisé (40) tournant autour d'un sixième axe (F), correspondant à son propre axe de symétrie et disposé perpendiculairement auxdits cinquièmes axes (E) ; ledit arbre (40) supportant de manière amovible et côte à côte une troisième et une quatrième roues de broyage (41, 42) angulairement rigides par rapport à celui-ci et espacées d'un troisième interaxe (i3), c'est-à-dire à une distance entre elles identique aux premier et deuxième interaxes (I1, I2) ; les troisième et quatrième roues de broyage (41, 42) étant contraintes de tourner ensemble autour du sixième axe (F), à la même vitesse ; et ledit arbre (40) étant équipé d'un ensemble de palier à montage rapide (43) destiné à relier lesdites troisième et quatrième roues de broyage (41, 42) audit arbre (40).

6. Station de finition automatisée selon la revendication 5, **caractérisée en ce que** ledit ensemble de palier à montage rapide (43) comprend : une broche tubulaire (44) disposée coaxialement audit arbre (40) et configurée pour supporter lesdites troisième et quatrième roues de broyage (41, 42) de manière angulairement rigide par rapport à celle-ci ; un certain nombre d'entretoises (45) portées par la broche (44) pour bloquer ensemble les troisième et quatrième roues de broyage (41, 42) au niveau du troisième interaxe (13) ; et un dispositif de raccordement rapide (46) destiné à relier angulairement, tête à tête, la broche (44) à l'arbre (40), ledit dispositif de raccordement rapide (46) étant de préférence du type à cône Morse.

7. Station de finition automatisée selon la revendication 5 ou 6, **caractérisée en ce qu'**elle comprend deux jeux (47, 48) desdites troisième (41b, 41c) et quatrième (42b, 42c) roues de broyage pouvant être raccordés de manière interchangeable audit arbre motorisé (40) : un premier jeu (47) configuré pour réaliser des chanfreins en J sur lesdits blocs (5) de matériau de friction et un deuxième jeu (48) configuré pour réaliser une fente (4) sur ladite première face (7) du bloc de matériau de friction.

8. Station de finition automatisée selon l'une quelconque des revendications précédentes, **caractérisée en ce que** ledit au moins un bras articulé robotisé (8) présente six axes à commande numérique, y compris ledit premier axe (A) ; et **en ce que** la station de finition automatisée (1) comprend deux desdits bras articulés robotisés (8) disposés côte à côte, chacun étant desservi par un convoyeur respectif (38) et par un premier et un deuxième modules de broyage (9, 37) disposés côte à côte devant le bras articulé robotisé correspondant (8) et du côté opposé à celui-ci par rapport au convoyeur correspondant (38).

9. Station de finition automatisée selon la revendication 8, **caractérisée en ce que** chacun desdits convoyeurs (38) est un convoyeur à bande sans fin et est muni de deux paires de gabarits de positionnement (49) pour lesdits éléments de freinage de véhicule (2), disposées en séquence, en tandem, le long du convoyeur (38) et agissant de part et d'autre de celui-ci, les paires de gabarits de positionnement (49) étant espacées d'un quatrième interaxe (I4) identique audit premier interaxe (I1).

10. Procédé pour réaliser des chanfreins (3) et/ou des fentes (4) sur un bloc (5) de matériau de friction porté par un support (6), le bloc de matériau de friction et le support formant un élément de freinage de véhicule (2), le procédé étant **caractérisé par le fait qu'**il est mis en œuvre par la station de finition (1) selon l'une quelconque des revendications précédentes, en actionnant ledit au moins un bras articulé robotisé (8) muni dudit outil (19) de manière à manipuler deux desdits éléments de freinage de véhicule (2) à la fois et à les amener simultanément en contact avec une paire respective d'une première et d'une deuxième roues de broyage (31, 32) ou d'une troisième et d'une quatrième roues de broyage (41, 42) disposées côte à côte avec un entraxe entre elles identique à un premier entraxe (I1) auquel l'outil (19) maintient lesdits deux éléments de freinage de véhicule (2) à la fois.
